# EUROPÄISCHE PATENTSCHRIFT

(11) **EP 1 325 845 B1**
(45) Veröffentlichungstag und Bekanntmachung des Hinweises auf die Patenterteilung: **18.01.2006**
(21) Anmeldenummer: 02013020.9
(22) Anmeldetag: 13.06.2002
(51) Int. Cl.: B60N 3/04

(54) **Innenverkleidungsteil, insbesondere für Kraftfahrzeuge**
Interior trim part, in particular for motor vehicles
Pièce de garnissage intérieure, en particulier pour véhicule automobile

(30) Priorität: 20.12.2001 DE 20120605 U
(43) Veröffentlichungstag der Anmeldung: 09.07.2003
(73) Patentinhaber: Ideal Automotive GmbH, 96052 Bamberg (DE)
(72) Erfinder: Exner-Ewarten, Detlev, 96178 Pommersfelden (DE)
(74) Vertreter: Oberdorfer, Jürgen

(56) Entgegenhaltungen:
- EP-A- 0 321 978
- EP-A- 0 529 575
- EP-A- 1 145 910
- CA-A- 2 032 599
- CH-A- 628 228
- DE-A- 19 812 925
- FR-A- 2 708 183
- US-A- 5 380 574

## Beschreibung

Die Erfindung betrifft ein Innenverkleidungsteil, insbesondere für Kraftfahrzeuge, mit einer obenliegenden Dekorschicht und einer mit dieser mittels einer Schmelzeschicht verbundenen rutschhemmenden Unterschicht.

Derartige Innenverkleidungsteile werden beispielsweise bei Kraftfahrzeugen verwendet, um die eigentlichen textilen Auskleidungsteile, beispielsweise im Bodenbereich des Innenraums des Kraftfahrzeugs, zu schonen. Die Auskleidungsteile sind im Kraftfahrzeug dauerhaft befestigt. Die Innenverkleidungsteile sollen abnehmbar sein. Die Innenverkleidungsteile sollen trotz ihrer Abnehmbarkeit auf den Auskleidungsteilen nicht rutschen.

Ein Innenverkleidungsteil der eingangs genannten Art ist in dem DE-GM 93 09 926 als Fußmatte beschrieben. Dort ist die rutschhemmende Unterschicht von einem vernadelten Stapelfaservlies gebildet. Es hat sich gezeigt, dass die Rutschfestigkeit den Forderungen nicht immer genügt. Dies ist darauf zurückzuführen, dass die nach unten ragenden Faserenden des Stapelfaservlieses nicht in allen Fällen hinreichend stabil in das textile Auskleidungsteil eintreten.

In der DE 296 22 755 U1 ist eine Schutzmatte für Kraftfahrzeuge beschrieben, bei der auf der Unterseite der Schutzmatte eine Beflockung aus Fasern als Antirutschschicht vorgesehen ist. Eine derartige Beflockung erfolgt in einem elektrostatischen Verfahren und setzt damit spezielle, die Beflockung bildende Kunststofffasern voraus. Eine derartige Schutzmatte ist in ihrer Herstellung aufwändig und damit teuer. Darüber hinaus ist die dauerhaft vollflächige Haftung der Beflockung schwer zu gewährleiste.

Aus dem DE-GM 87 10 779.1 ist eine Fußmatte für Kraftfahrzeuge bekannt, bei der als Rutschsicherung eine Schaumstoffbahn vorgesehen ist. Die Rutschsicherheit hängt davon ab, inwieweit Pole des Auskleidungsteils in den offenporigen Schaumstoff eintreten. Die Schaumstoffbahn als solche weist keine Elemente auf, die in die Struktur des Auskleidungsteils eintreten. Darüber hinaus hat die Schaumstoffbahn den Nachteil, dass von ihr Emissionen, insbesondere Gerüche, ausgehen und dass sie thermisch nicht recycelfähig ist.

Bei der Bodenmatte der EP 0 512 904 B1 sind als der Rutschfestigkeit dienende Verankerungseinrichtung zahlreiche langgestreckte, spitze Elemente vorgesehen. Deren Herstellung ist aufwändig und teuer, weil sie in einem Pressverfahren einzeln hergestellt werden müssen. Diese Bodenmatte ist thermisch nicht recycelbar.

Aus dem DE-GM 94 15 231 ist eine Fußmatte für Kraftfahrzeuge aus einem gummiartigen Werkstoff bekannt, an deren Unterseite zur Verringerung der Rutschgefahr Noppen ausgebildet sind. Solche Noppen können auf der Stuktur des Auskleidungsteils des Fahrzeugs rutschen. Die Fußmatte eignet sich nicht für ein thermisches Recyceln.

In der DE 44 39 208 C2 ist eine Antirutsch-Matte beschrieben. Diese ist in der Herstellung teuer und entwickelt Emissionen, insbesondere Gerüche, und ist thermisch nicht recycelbar.

Aus der EP 0 343 271 B1 ist eine Fußmatte bekannt, an deren Unterseite zur Rutschsicherheit eine Vielzahl von Borsten ausgebildet ist. Die Borsten sind in Gruppen an separaten Elementen angeordnet. Die Herstellung einer solchen Fußmatte ist sehr aufwändig und teuer und bietet darüber hinaus keine vollflächige Verbindung der Fußmatte mit dem Auskleidungsteil, weil die die Borsten tragenden Elemente nur in einzelne Zonen angeordnet sind.

In dem DE-GM 93 02 659 ist ein Befestigungselement zur rutschsicheren Festlegung eines Teppichs auf einer Unterlage beschrieben. Zur Festlegung dient eine Metallplatte mit Krallen.

Ein textiler Fußbodenbelag, der recycelfähig ist, ist in dem DE-GM 91 15 657 beschrieben. Besondere Maßnahmen zur Verbesserung der Rutschfestigkeit sind dort nicht vorgesehen.

Aus dem DE-GM 83 37 112 ist eine Bodenmatte mit erhöhter Rutschfestigkeit bekannt. Die Rutschfestigkeit soll durch weichelastisches Material erreicht werden.

Aus der Gattungsbildenden Offenlegung US 5,308,574 ist ein Innenverkleidungsteil mit einer Dekorschicht und einer mittels einer Schmelzeschicht verbundenen rutschhemmende Unterschicht bekannt, wobei die rutschhemmende Untersicht von einem mit Schnittflor benadelten Träger gebildet ist, wobei die Polenden des Schnittflors nach unten über den Träger überstehen.

Aufgabe der Erfindung ist es, ein Innenverkleidungsteil der eingangs genannten Art vorzuschlagen, das eine hohe Rutschfestigkeit aufweist und dennoch preisgünstig herstellbar ist

Erfindungsgemäß ist obige Aufgabe durch die Merkmale des Anspruchs 1 gelöst.

Das Benadeln bzw. Betuften des Trägers ist ein übliches technisches Verfahren. Beim Betuften werden durch den Träger Endlosgarne, Filamente oder Bändchen in Schlingen durchgenadelt. Anschließend werden dann die unterseitigen Schlingen aufgeschnitten, wobei die überstehenden Polenden entstehen. Die Polenden des Schnittflors sind aus Endlosbändchen oder aus einem Garn und Endlosbändchen hergestellt, stehen nach unten über und verkrallen sich dann in ihrer Gesamtheit im Auskleidungsteil, welches je nach Gestaltung seinerseits mit seinen Polenden zwischen den Schnittflor des Trägers greift. Damit ist eine hohe Rutschfestigkeit erreicht. Die rutschhemmende Unterschicht lässt sich auf kostengünstige Weise in einem üblichen Verfahren herstellen.

Vorzugsweise besteht der Träger und der Schnittflor sowie die Dekorschicht und die Schmelzschicht aus einem thermoplastischen Kunststoffmaterial. Damit ist eine thermische Recycelbarkeit des Innenverkleidungsteils gewährleistet. Vor allem der Träger und der Schnittflor weisen weder Gummi noch Latex noch PU-Schaumstoffe oder PVC-Schaumstoffe auf. Damit ist das Innenverkleidungsteil emissionsarm und verbreitet keine unangenehmen Gerüche.

Eine besonders hohe Rutschfestigkeit des Innenverkleidungsteils auf Auskleidungsteilen, die gewöhnlich aus Tufting-Velour, Tufting-Schlingenmaterial oder Nadelvlies bestehen, wird dadurch erreicht, dass der Schnittflor um 2 bis 6 mm, insbesondere 2,5 bis 4 mm, über den Träger übersteht und/oder der Schnittflor auf dem Träger mit einer Reihenzahl von 8 bis 50, insbesondere 25 bis 40 Reihen pro 10 cm über die Breite des Trägers und mit einer Stichzahl von 8 bis 50, insbesondere 25 bis 40, Stichen pro 10 cm Länge des Trägers angeordnet ist

Der Schnittflor besteht aus einem, insbesondere texturierten, Garn und aus, insbesondere fibrillierten, Endlosbändchen. Der Schnittflor hat vorzugsweise einen Titerwert von 0,1 g/m bis 0,6 g/m (1000 bis 6000 d'tex), wobei ein einzelnes Filament des Garns einen Titerwert von 1,7 mg/m bis 30 mg/m (17 bis 300 d'tex), insbesondere 4,4 mg/m bis 5,7 mg/m (44 bis 57 d'tex), hat. Sein Gewicht beträgt beispielsweise 150 bis 600 g/m², insbesondere 180 bis 450 g/m².

Aufgrund der hohen Rutschfestigkeit des Innenverkleidungsteils kann auf zusätzliche mechanische Befestigungsmittel verzichtet werden.

Der mit dem Schnittflor benadelte, getuftete, Träger ist ein Vlies, insbesondere thermisch gebundenes, d.h. thermobondiertes, Vlies, oder ein Gewebe oder Gewirke.

Weitere vorteilhafte Ausgestaltungen der Erfindung ergeben sich aus den Unteransprüchen und der folgenden Beschreibung eines Ausführungsbeispiels. In der Zeichnung zeigen:
Figur 1 einen Teilschnitt eines Innenverkleidungsteils mit Dekorschicht, Schmelzeschicht und rutschhemmender Unterschicht schematisch,
Figur 2 einen Schnitt längs der Linie II-II nach Fig. 1
Figur 3 die rutschhemmende Unterschicht im Schnitt, gegenüber Fig.1 vergrößert, wobei der Träger mit einem Garn benadelt ist,
Figur 4 die rutschhemmende Unterschicht im Schnitt, gegenüber Fig.1 vergrößert, wobei der Träger mit Endlosbändchen benadelt ist.
Figur 5 eine weitere Ausführung der Unterschicht in einer Fig.2 entsprechenden Ansicht, wobei in den Schnittflorreihen abwechselnd Garn und Endlosbändchen vorgesehen sind.

Ein, speziell als Fußmatte eines Kraftfahrzeugs dienendes Innenverkleidungsteil weist eine obenliegende Dekorschicht 1, eine Schmelzeschicht 2 und eine rutschhemmende Unterschicht 3, d.h. Antirutschschicht, auf. Das Innenverkleidungsteil dient dem Schutz eines - nicht dargestellten - textilen Auskleidungsteils, insbesondere eines Kraftfahrzeugs, und ist auf dieses Auskleidungsteil aufzulegen.

Mittels der Schmelzeschicht 2 ist die rutschhemmende Unterschicht 3 mit der Dekorschicht 1 thermisch verbunden. Das Innenverkleidungsteil kann an seinem Umfangsrand mit einem Band 4 oder einer Rändelung in üblicher Weise eingefasst sein.

Die Dekorschicht 1 besteht aus thermoplastischem Material. Vorzugsweise ist sie ein Tufting-Velour, eine Tufting-Schlingenware, oder ein Polnadelvlies. Sie kann auch eine Folie oder ein Gewebe oder Gewirke sein. Die Dekorschicht 1 kann einlagig oder mehrlagig gestaltet sein, wie dies bekannt ist.

Die Schmelzeschicht 2 besteht aus einem Polyolefin. Die rutschhemmende Unterschicht 3 ist von einem Träger 5 und Schnittflor 6 gebildet. Der Träger 5 ist mit dem Schnittflor 6 benadelt, d.h. betuftet. Der Träger 5 ist ein Vlies (non woven-material), Gewebe oder Gewirke, das zur Stabilitätserhöhung thermisch gebunden, d.h. thermobondiert sein kann. Das Flächengewicht des Trägers beträgt 30 bis 250 g/m², insbesondere 50 bis 130 g/m².

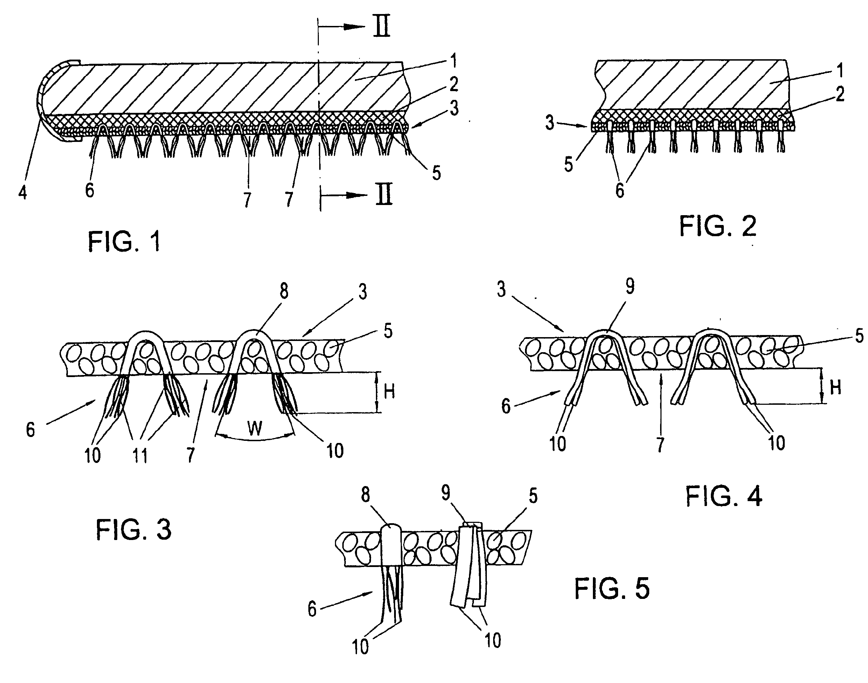

Zur Herstellung der rutschhemmenden Unterschicht wird der Träger 5 mit Endlosgarn und Endlosbändchen in einem Tufting-Velour-Verfahren benadelt und die unten in Bereichen 7 bei dem Betuften entstehenden Schlingen des Endlosmaterials sind aufgeschnitten, so dass der Schnittflor 6 entsteht, der einzelne Garnschlingen 8 (vgl. Fig. 3) bzw. einzelne Endlosbändchenschlingen 9 (vgl. Fig. 4) aufweist.

Der Träger 5 und der Schnittflor 6 bestehen aus einem thermoplastischen Kunststoffmaterial, speziell Polypropylen (PP), Polyester (PET), Copolyester (CoPET), Polyamid (PA) oder einer Mischung dieser Materialien, speziell PET/PA, PET/PP, PET/CoPET. Das zur Herstellung des Schnittflors verwendete Endlosgarn hat einen Titerwert von 1000 bis 6000 d'tex, wobei ein einzelnes Filament (Faden), aus dem das Garn besteht, einen Titerwert von 1,7 mg/m bis 30 mg/m (17 bis 300 d'tex), insbesondere 4,4 mg/m bis 5,7 mg/m (44 bis 57 d'tex), hat

Das Garn kann ein CF-Garn (continues filament Garn), also ein Garn aus Endlosfäden sein. Als Garn wird vorzugsweise ein BCF-Garn (bulked continues filament Garn), also ein texturiertes Garn aus Endlosfäden verwendet Bei einem solchen texturierten Garn neigen die - geschnittenen - Fäden zum Aufspreizen. Dadurch ist erreicht, dass sich die einzelnen Fäden des Garns nach dem genannten Aufschneiden der in den Bereichen 7 aufgeschnittenen Schlingen aufspreizen, was die Rutschfestigkeit verbessert, weil dadurch viele beabstandete Polenden 10 (vgl. Fig.3) entstehen, die in die Struktur des Auskleidungsteils eingreifen können. In Figur 3 sind aufgespreizte Filamentabschnitte 11 des Garns dargestellt. Diese stehen in Öffnungswinkeln W. Sie stehen also nicht nur in Richtung des Garns als solchem nach unten über.

Die Endlosbändchen - solche werden beispielsweise bei der Herstellung von künstlichem Rasen verwendet - sind vorzugsweise fibrilliert, so dass nach dem genannten Aufschneiden der überstehenden Schlingen eine Vielzahl von Polenden 10 (vgl. Fig.4) entsteht Die Endlosbändchen, als Folienbändchen, können fibrilliert oder nicht fibrilliert, gezwirnt oder nicht gezwirnt sein in einem Titerbereich von 30 mg/m bis 1 g/m (300 d'tex bis 10000 d'tex). Die Verwendung fibrillierter Endlosbändchen für die Herstellung des Schnittflors 6 ist vorteilhaft, weil durch die Fibrillierung gerauhte Ränder bestehen, die den Halt am Träger 5 unterstützen. In Figur 4 sind zur Vereinfachung der Darstellung nur zwei fibrillierte Bändchen pro Schlinge dargestellt. In der Praxis werden Bändchen mit einer Fibrillierung verwendet, aus der mehr als vier Polenden 10 je Schlingenende entstehen.

Der Schnittflor 6 ist durch die Betuftung beispielsweise so gestaltet, dass die Stichzahl am Träger 5, 8 bis 50, vorzugsweise 25 bis 40 Stiche je 10 cm der Länge (vgl. Fig.1) des Trägers 5 ist. Der Reihenabstand der Schlingen des Schnittflors 6 (vgl. Fig.2) ist beispielsweise so bemessen, dass 8 bis 50 Reihen, vorzugsweise 25 bis 40 Reihen pro 10 cm der Breite des Trägers 5 bestehen. Damit ist auf der unterseitigen Fläche des Innenverkleidungsteils ein etwa quadratisches Muster von überstehenden Polenden 10 geschaffen, wobei es bei dem Aufsetzen des Innenverkleidungsteils auf das Auskleidungsteil zu einem über die Gesamtfläche des Innenverkleidungsteils im wesentlichen vollflächigen Eingreifen der Polenden 10 in die Struktur des Auskleidungsteils kommt.

Der Schnittflor 6 ist so gestaltet, dass er mit seinen Polenden 10 um die Höhe H nach unten, also an der der Dekorschicht 1 abgewandten Seite des Innenverkleidungsteils, gegenüber dem Träger 5 vorsteht. Die Höhe H beträgt 2 bis 6 mm, insbesondere 2,5 bis 4 mm. Damit ist gewährleistet, dass die Polenden 10 hinreichend tief in die textile Struktur des Auskleidungsteils beim Auflegen eingreifen, wodurch die gewünschte Rutschfestigkeit gewährleistet ist.

Es ist auch möglich, als Schnittflor 6 teils Schlingen 8 des genannten Garns und teils Schlingen 9 der genannten Endlosbändchen zu verwenden. Der Träger 5 wird in diesem Fall mit Garn und Endlosbändchen in benachbarten Reihen, oder Rastergruppen benadelt. Im Schnittflor bestehen dann Reihen aus Garn und Endlosbändchen, wobei gruppenweise mehrere Reihen aus Garn neben einer oder mehreren Reihen aus Endlosbändchen liegen. Beispielsweise folgt je vier Reihen aus Garn eine Reihe aus Endlosbändchen. Dabei sind im Schnittflor insgesamt mehr Reihen aus Garn als aus Endlosbändchen vorgesehen. Da die feinen Filamente der Gamschlinge 8 und die gröberen, starren Bändchenschlingen 9 in den möglichen unterschiedlichen Strukturen des Auskleidüngsteils unterschiedlich haften, wird durch diese Kombination gewährleistet, dass das Innenverkleidungsteil auf den verschiedensten Auskleidungsteilen rutschfest aufliegt. Die Enden von Bändchenschlingen 9 werden sich in ein hochfloriges Auskleidungsteil besser verhaken als Filamentenden des Gams. In benachbarten Reihen können Garnschlingen 8 und Bändchenschlingen 9 auf Lücke versetzt sein. Dadurch haben die Filamente der Garnenden und die Bändchenenden im Bereich der Höhe H mehr Raum sich aufzuspreizen, als dann, wenn die Stiche nicht gegeneinander versetzt wären. Die Versetzung der Stiche benachbarter Reihen ist auch günstig, wenn nur Garn oder nur Bändchen verwendet werden. Den Träger 5 wenigstens teilweise mit den genannten Bändchen zu benadeln ist auch vorteilhaft, weil Bändchenmaterial weniger kostet als Garn.

Das beschriebene Innenverkleidungsteil lässt sich folgendermaßen herstellen:

Die Dekorschicht 1 wird als Bahnenware vorgefertigt. Die den Träger 5 und den Schnittflor 6 bildende Unterschicht 3 wird ebenfalls als Bahnenware vorgefertigt. Diese Bahnenwaren werden dann mittels der Schmelzeschicht 2 verbunden. Dies kann in verschiedener Weise erfolgen. Es ist möglich, die Dekorschicht 1 und die Unterschicht 3 über Rollen zu leiten, wobei in einem zwischen den Rollen bestehenden Spalt die erwärmte Schmelzeschicht 2, beispielsweise mit einer Breitschlitzdüse, im thermoplastischen Zustand zugeführt wird. Dabei wird die Dekorschicht 1 mit der Unterschicht 3 thermisch verschmolzen, so dass eine Bahnenware entsteht, die die Dekorschicht 1 und die Unterschicht 3 umfasst. Anschließend kann dann aus dieser die Dekorschicht 1 und die Unterschicht 3 aufweisenden Bahnenware das jeweilige Innenverkleidungsteil in der gewünschten Form ausgestanzt oder ausgeschnitten werden. Abschließend kann die Einfassung vorgenommen werden.

Bei anderen Verfahren ist es möglich, das die Schmelzeschicht bildende, thermoplastische Material auf der vorgefertigten Dekorschicht 1 oder der vorgefertigten Unterschicht 3 in Pulverform zu verteilen und, beispielsweise durch eine Infrarot-Einrichtung aufzuschmelzen und anschließend dann die Dekorschicht 1 und die Unterschicht 3 aufeinander zu bringen, d.h. zu laminieren, und dann aus dieser Bahnenware das Innenverkleidungsteil formgerecht auszustanzen oder auszuschneiden. Ein Auflaminieren mit niedrigem Druck ist günstiger als ein Aufkalandrieren mit hohem Druck, weil beim Auflaminieren die Polenden 10 weniger auf den Träger 5 gedrückt werden als beim Aufkalandrieren.

Die Verbindung der in Form von Bahnenware vorgefertigten Dekorschicht 1 mit der in Form von Bahnenware vorgefertigten Unterschicht 3 mittels der Schmelzeschicht 2 hat den Vorteil, dass das dabei entstehende Zwischenprodukt wieder eine Bahnenware ist, aus der sich die unterschiedliche Konturen aufweisenden Innenverkleidungsteile derart ausstanzen oder ausschneiden lassen, dass durch geeignete Konturverschachtelung möglichst wenig Abfall entsteht. Dabei erübrigt sich eine aufwändige Ausrichtung einer vorgeschnittenen Dekorschicht gegenüber einer vorgeschnittenen Unterschicht.

Wenn das Innenverkleidungsteil dreidimensional verformt werden soll, ist es auch möglich, die vorgeschnittene oder vorgestanzte, plane Dekorschicht 1 in ein entsprechendes Formwerkzeug einzulegen und eine entsprechend vorgeschnittene oder vorgestanzte Unterschicht 3 in das Formwerkzeug einzulegen und dann mittels des Formwerkzeugs die Dekorschicht 1 und die Unterschicht 3 zu verformen und mittels der Schmelzeschicht 2 zu verbinden.

Bei Innenverkleidungsteilen ist eine Wasserdichtigkeit in der Weise gewünscht, dass Wasser von der Dekorschicht 1 nicht in das Auskleidungsteil gelangt. Die Wasserdichtigkeit lässt sich dadurch erreichen, dass die Schmelzeschicht 2 vollflächig, ohne Unterbrechungen, zwischen der Dekorschicht 1 und der Unterschicht 3 verläuft.

Das beschriebene Innenverkleidungsteil lässt sich auf ein textiles Auskleidungsteil auflegen. Es bildet mit seinen in die textile Struktur des Auskleidungsteils eintretenden Polenden 10 eine Verbindung derart, dass das Innenverkleidungsteil selbst bei dessen Belastung mit Kräften parallel zur Ebene des Auskleidungsteils, beispielsweise durch Schuhe von Fahrzeuginsassen, kaum verrutschen kann. Das Innenverkleidungsteil ist thermisch recycelbar. Es gibt kaum Emissionen ab und ist kostengünstig herstellbar.

## Patentansprüche

1. Innenverkleidungsteil, insbesondere für Kraftfahrzeuge, mit einer obenliegenden Dekorschicht und einer mit dieser mittels einer Schmelzeschicht verbundenen rutschhemmenden Unterschicht, wobei die rutschhemmende Unterschicht (3) von einem mit Schnittflor (6) benadelten Träger (5) gebildet ist, und wobei die Polenden (10) des Schnittflors (6) nach unten über den Träger (5) überstehen, **dadurch gekennzeichnet, dass** der Schnittflor (6) aus Endlosbändchen oder aus einem Garn und aus Endlosbändchen hergestellt ist.

2. Innenverkleidungsteil nach Anspruch 1, **dadurch gekennzeichnet, dass** der Träger (5) und der Schnittflor (6) sowie die Dekorschicht (1) und die Schmelzeschicht (2) aus einem thermoplastischen Kunststoffmaterial bestehen.

3. Innenverkleidungsteil nach Anspruch 1 oder 2, **dadurch gekennzeichnet, dass** der Träger (5) und der Schnittflor (6) aus Polypropylen (PP), Polyester (PET), Copolyester (CoPET), Polyamid (PA) oder einer Mischung (PET/PA, PET/PP, PET/CoPET) dieser Materialien bestehen.

4. Innenverkleidungsteil nach einem der vorhergehenden Ansprüche, **dadurch gekennzeichnet, dass** der Träger (5) ein Vlies oder Gewebe oder Gewirke ist.

5. Innenverkleidungsteil nach einem der vorhergehenden Ansprüche, **dadurch gekennzeichnet, dass** der Träger (5) ein Flächengewicht von 30 bis 250 g/m², insbesondere 50 bis 130 g/m², aufweist.

6. Innenverkleidungsteil nach einem der vorhergehenden Ansprüche, **dadurch gekennzeichnet, dass** das Garn ein texturiertes Garn ist.

7. Innenverkleidungsteil nach einem der vorhergehenden Ansprüche, **dadurch gekennzeichnet, dass** die Endlosbändchen fibrillierte Endlosbändchen sind.

8. Innenverkleidungsteil nach Anspruch 1, **dadurch gekennzeichnet, dass** im Schnittflor (6) Reihen aus Garn und Endlosbändchen vorgesehen sind, wobei gruppenweise mehrere Reihen aus Garn neben einer oder mehreren Reihen aus Endlosbändchen liegen.

9. Innenverkleidungsteil nach Anspruch 1 oder 8, **dadurch gekennzeichnet, dass** der Schnittflor aus Garn und Endlosbändchen in Reihen abwechselnd vorgesehen ist und insbesondere in benachbarten Reihen versetzt ist.

10. Innenverkleidungsteil nach einem der vorhergehenden Ansprüche, **dadurch gekennzeichnet, dass** der Schnittflor (6) ein Gewicht von 150 bis 600 g, insbesondere 180 bis 450 g, pro m² Fläche des Trägers (5) aufweist

11. Innenverkleidungsteil nach einem der vorhergehenden Ansprüche, **dadurch gekennzeichnet, dass** der Schnittflor (6) einen Titerwert von 0,1 g/m bis 0,6 g/m (1000 bis 6000 d'tex) hat, wobei ein einzelnes Filament des Garns einen Titerwert von 1,7 mg/m bis 30 mg/m (17 bis 300 d'tex), insbesondere 4,4 mg/m bis 7,5 mg/m (44 bis 75 d'tex), aufweist.

12. Innenverkleidungsteil nach einem der vorhergehenden Ansprüche, **dadurch gekennzeichnet, dass** der Schnittflor (6) um 2 bis 6 mm, insbesondere 2,5 bis 4 mm, über den Träger (5) übersteht

13. Innenverkleidungsteil nach einem der vorhergehenden Ansprüche, **dadurch gekennzeichnet, dass** der Schnittflor (6) auf dem Träger (5) mit einer Reihenzahl von 8 bis 50, insbesondere 25 bis 40 Reihen pro 10 cm Breite des Trägers (5) und mit einer Stichzahl von 8 bis 50, insbesondere 25 bis 40 Stichen pro 10 cm Länge des Trägers (5) angeordnet ist.

14. Innenverkleidungsteil nach einem der vorhergehenden Ansprüche, **dadurch gekennzeichnet, dass** die Schmelzeschicht (2) eine wasserundurchlässige Schicht zwischen der Dekorschicht (1) und dem Träger (5) bildet.

## Claims

1. Internal covering part, particularly for motor vehicles, with a top decorative layer and a slip-inhibiting underlayer connected thereto by a melt layer, the slip-inhibiting underlayer (3) being formed by a support (5) needled with cut pile (6) and wherein the ends (10) of the cut pile (6) project downwards over the support (5), **characterized in that** the cut pile (6) is made from continuous ribbons or a yarn and continuous ribbons.

2. Internal covering part according to claim 1, **characterized in that** the support (5) and cut pile (6), as well as the decorative layer (1) and melt layer (2) comprise a thermoplastic material.

3. Internal covering part according to claim 1 or 2, **characterized in that** the support (5) and cut pile (6) comprise polypropylene (PP), polyester (PET), copolyester (CoPET), polyamide (PA) or a blend (PET/PA, PET/PP, PET/CoPET) of said materials.

4. Internal covering part according to one of the precoding claims, **characterized in that** the support (5) is a nonwoven or woven fabric or knitted fabric.

5. Internal covering part according to one of the preceding claims, **characterized in that** the support (5) has a weight per unit area of 30 to 250 g/m2, particularly 50 to 130 g/m2.

6. Internal covering part according to one of the preceding claims, **characterized in that** the yarn is a textured yarn.

7. Internal covering part according to one of the preceding claims, **characterized in that** the continuous ribbons are fibrillated continuous ribbons.

8. Internal covering part according to claim 1, **characterized in that** in the cut pile (6) are provided rows of yarn and continuous ribbons and in groups there are several rows of yarn alongside one or more rows of continuous ribbons.

9. Internal covering part according to claim 1 or 8, **characterized in that** the cut pile of yarn and continuous ribbons is alternately provided in rows and is in particular offset in adjacent rows.

10. Internal covering part according to one of the preceding claims, **characterized in that** the cut pile (6) has a weight of 150 to 600 g, particularly 180 to 450 g, per m² of the surface of the support (5).

11. Internal covering part according to one of the preceding claims, **characterized in that** the cut pile (6) has a titre value of 0.1 to 0.6 g/m (1000 to 6000 dtex), in which an individual yarn filament has a titre value of 1.7 to 30 mg/m (17 to 300 dtex), particularly 4.4 to 7.5 mg/m (44 to 75 dtex).

12. Internal covering part according to one of the preceding claims, **characterized in that** the cut pile (6) projects by 2 to 6 mm, particularly 2.5 to 4 mm over the support (5).

13. Internal covering part according to one of the preceding claims, **characterized in that** the cut pile (6) is placed on the support (5) with 8 to 50, particularly 25 to 40 rows per 10 cm width of support (5) and with 8 to 50, particularly 25 to 40 stitches per 10 cm of length of support (5).

14. Internal covering part according to one of the preceding claims, **characterized in that** the melt layer (2) forms a waterproof layer between the decorative layer (1) and the support (5).

## Revendications

1. Partie d'habillage intérieur, en particulier pour des véhicules automobiles, avec une couche décor située à l'extérieur et une couche inférieure antidérapante et reliée à celle-ci au moyen d'une couche de fusible, la couche inférieure (3) antidérapante étant formée d'un support (5) piqué avec du poil de coupe (6), et les extrémités polaires (10) du poil de coupe (6) dépassant vers le bas du support (5), **caractérisée en ce que** le poil de coupe (6) est fabriqué à base de bandelettes continues ou à base d'un fil et de bandelettes continues.

2. Partie d'habillage intérieur selon la revendication 1, **caractérisée en ce que** le support (5) et le poil de coupe (6) ainsi que la couche décor (1) et la couche de fusible (2) sont à base de matériau plastique thermoplastique.

3. Partie d'habillage intérieur selon la revendication 1 ou 2, **caractérisée en ce que** le support (5) et le poil de coupe (6) sont à base de polypropylène (PP), de polyester (PET), de copolyester (CoPET), de polyamide (PA) ou d'un mélange (PET/PA, PET/PP, PET/CoPET) de ces matériaux.

4. Partie d'habillage intérieur selon l'une quelconque des revendications précédentes, **caractérisée en ce que** le support (5) est un non-tissé ou un tissage ou tissu à maille.

5. Partie d'habillage intérieur selon l'une quelconque des revendications précédentes, **caractérisé en ce que** le support (5) présente un poids surfacique de 30 à 250 g/m², en particulier 50 à 130 g/m².

6. Partie d'habillage intérieur selon l'une quelconque des revendications précédentes, **caractérisée en ce que** le fil est un fil texturé.

7. Partie d'habillage intérieur selon l'une quelconque des revendications précédentes, **caractérisée en ce que** les bandelettes continues sont des bandelettes continues fibrillées.

8. Partie d'habillage intérieur la revendication 1, **caractérisée en ce que** des rangées de fils et de bandelettes continues sont prévues dans le poil de coupe (6), plusieurs rangées de fils étant disposées par groupes à côté d'une ou plusieurs rangées de bandelettes continues.

9. Partie d'habillage intérieur selon la revendication 1 ou 8, **caractérisée en ce que** le poil de coupe à base de fils et de bandelettes continues est prévu alternativement en rangées et en particulier est décalé en rangées voisines.

10. Partie d'habillage intérieur selon l'une quelconque des revendications précédentes, **caractérisée en ce que** le poil de coupe (6) présente un poids de 150 à 600 g environ, en particulier 180 à 450 g, par m² de surface du support (5).

11. Partie d'habillage intérieur selon l'une quelconque des revendications précédentes, **caractérisée en ce que** le poil de coupe (6) présente une valeur de titre de 0,1 g/m jusqu'à 0,6 g/m (1000 à 6000 d'tex), un filament individuel du fil présentant une valeur de titre de 1,7 mg/m jusqu'à 30 mg/m (17 à 300 d'tex), en particulier 4,4 mg/m jusqu'à 7,5 mg/m (44 jusqu'à 75 d'tex).

12. Partie d'habillage intérieur selon l'une quelconque des revendications précédentes, **caractérisée en ce que** le poil de coupe (6) dépasse de 2 à 6 mm, en particulier de 2,5 à 4 mm, du support (5).

13. Partie d'habillage intérieur selon l'une quelconque des revendications précédentes, **caractérisée en ce que** le poil de coupe (6) est disposé sur le support (5) avec un nombre de rangées de 8 à 50, en particulier 25 à 40 rangées par 10 cm de largeur du support (5) et d'un nombre de piqûres de 8 à 50, en particulier 25 à 40 piqûres par 10 cm de longueur du support (5).

14. Partie d'habillage intérieur selon l'une quelconque des revendications précédentes, **caractérisée en ce que** la couche de fusion (2) forme une couche imperméable à l'eau entre la couche décor (1) et le support (5).
